# EUROPEAN PATENT APPLICATION

(11) **EP 4 531 244 A1**
(43) Date of publication of application: **02.04.2025**
(21) Application number: 23200411.9
(22) Date of filing: 28.09.2023
(51) Int. Cl.: H02K 1/20, H02K 1/278, H02K 1/2791, H02K 1/32, H02K 7/18

(54) **GENERATOR PROVIDING ENHANCED MATERIAL UTILIZATION AND EFFICIENCY**

(71) Applicant: Siemens Gamesa Renewable Energy A/S, 7330 Brande (DK)
(72) Inventor: Azar, Ziad, Sheffield S10 4ED (GB); Clark, Richard, Worrall S35 0AF (GB); Gonzalez, Adolfo Garcia, 7400 Herning (DK)
(74) Representative: SGRE-Association

(57) **Abstract**

It is described a Permanent magnet synchronous generator (100), in particular for a wind turbine (730), comprising: a stator (105) having plural tooth segment rows (107), each tooth segment rows extending in an axial direction (104) and comprising plural tooth segments (108a,b,c,d) alternating with stator cooling ducts (109a,b,c); a rotor (106) having plural magnet module rows (111), each magnet module row extending in the axial direction (104) and comprising plural magnet modules (112a,b,c,d) providing magnet active regions (113a,b,c,d) alternating with magnet inactive regions (114a,b,c) in the axial direction; wherein at least one magnet inactive region (114a) of at least one magnet module row (111) is axially aligned with a stator cooling duct (109a).

## Description

### Field of invention

The present invention relates to a permanent magnet synchronous generator and further relates to a wind turbine comprising the generator. Furthermore, the present invention relates to a method of manufacturing a permanent magnet synchronous generator.

### Art Background

A conventional permanent magnet generator comprises a stator with plural teeth protruding for example radially outwards. On the rotor house, plural permanent magnets are mounted which during operation are in interaction with windings wound around the teeth. Conventionally, plural magnet modules are inserted along tracks or trails in the axial direction. A conventional stator may also comprise a cooling system for cooling the stator during operation.

It has been observed that the conventional generators require a tremendous amount of magnets which increases the weight of the generator as well as the costs. It has further been observed that a conventional generator requires a tremendous magnet volume or magnet weight per torque or per kilowatt generated power.

Thus, there may be a need for a permanent magnet synchronous generator, wherein at least some of the above-mentioned problems are mitigated. There may in particular be a need for a permanent magnet synchronous generator, where costs are reduced or iron losses are reduced or less magnet material is required to construct the generator.

### Summary of the Invention

This need may be met by the subject matter according to the independent claims. Advantageous embodiments of the present invention are described by the dependent claims.

According to an embodiment of the present invention it is provided a permanent magnet synchronous generator, in particular for a wind turbine, comprising: a stator having plural tooth segment rows, each tooth segment rows extending in an axial direction and comprising plural tooth segments alternating with stator cooling ducts; a rotor having plural magnet module rows, each magnet module row extending in the axial direction and comprising plural magnet modules providing magnet active regions alternating with magnet inactive regions in the axial direction; wherein at least one magnet inactive region of at least one magnet module row is axially aligned with a stator cooling duct.

The generator may have a rotation axis extending along a symmetry axis of the stator as well as the rotor. The rotation axis runs parallel to the axial direction. The radial direction is perpendicular to the axial direction as well as to the circumferential direction which is also perpendicular to the radial direction.

The plural tooth segment rows may protrude radially outwards (for an outer rotor) or radially inwards (for an inner rotor). Around the tooth segment rows, plural windings may be wound. The windings may be wound in a concentrated winding topology or a distributed winding topology depending on the particular application.

The stator may provide or comprise a cooling system thereby utilizing the stator cooling ducts which are provided between adjacent tooth segments being adjacent in the axial direction. Plural tooth segments in one tooth segment row may be arranged side by side along the axial direction having in between stator cooling ducts. A tooth segment row thus does not provide a continuous tooth running in the axial direction but the plural tooth segments which are interrupted by the stator cooling ducts. In the region of the tooth segments, lamination may be present or in other words, the tooth segments may be formed by lamination having or consisting of ferromagnetic material which is permeable.

The cooling ducts may not comprise ferromagnetic material but potentially other non-magnetic and non-ferromagnetic permeable material, for example elements (spacers) for stabilizing the stator construction. The cooling ducts may for example comprise one or more spacers in order to enhance rigidity.

The number of tooth segments in one tooth segment row may for example be between 5 and 50 for example. The diameter of the generator may for example be between 3 m and 15 m or 20 m. The axial length of the entire generator may for example be between 0.5 m and 3 m for example. Other values are possible.

The stator may in general be manufactured from plural laminations comprising ferromagnetic permeable material which are stacked together. In the assembled generator, the cooling ducts may substantially run or extend along the radial direction. During operation, cooling fluid, such as air, may be guided through the cooling ducts and may exchange heat with the limiting material (e.g. of the laminations) limiting the cooling ducts. Thereby, an efficient cooling may be achieved. The stator air ducts may be distributed across the length of the stator laminations.

Having these air spaces in the stator may result in a shorter equivalent length of the magnetic system. In a conventional generator the magnet modules are inserted resulting in a continuous stack of magnet material with gaps or brakes between modules due to the cover at intervals defined by the actual module size. Conventionally, the brakes are not necessarily aligned with the air ducts in the stator. Consequently, conventionally, portions of the magnet modules are facing the air ducts, meaning that some of the magnet material is not fully utilized during operation for power production. Thus, the not fully utilized magnet material does not contribute to the output torque/power of the generator or its contribution is less effective.

Therefore, according to embodiments of the present invention, a magnet/rotor design is proposed to account for the air-duct spaces in the stator iron in the axial direction by having corresponding gaps axially in the magnets on the rotor.

Conventionally, the same distribution of magnets around the rotor may be used currently in all conventional generators. Thereby, the magnet volume is not utilized efficiently in the conventional generator.

Each tooth segment may for example have a substantially rectangular shape in a cross-section viewed along the radial direction. Each magnet module may substantially have a rectangular shape when viewed in the radial direction in cross-section.

The magnet modules may be connected to a rotor house (comprised in the rotor) for example by T-shaped rails or holding members provided at for example the inner surface of the rotor house and extending in the axial direction. For manufacturing, the magnet modules may be inserted one by one into the rails or tracks and their respective axial position may be controlled in order to achieve the respective alignment at least in the axial direction with respect to one or more stator cooling ducts.

Each magnet module may represent a physical entity or physical piece, while a magnet active region and/or a magnet inactive region may be formed by a portion of a physical piece or unity or entity or portions of several physical entities or pieces. For example, a magnet active region may be formed by portions of two adjacent magnet modules, or an entire magnet module or a portion of a single magnet module. Similarly, also the magnet inactive regions may be formed by portions of several magnet modules or an entire magnet module or a portion of a single magnet module or by an element (or a space or air) different from any magnet module. The magnet active regions may be considered as regions which efficiently contribute to generation of torque/power during operation, as these magnet active regions substantially interact with respective lamination magnetic permeable material comprised in the tooth segments.

When at least one magnet inactive region of at least one magnet module row is axially aligned with a stator cooling duct, magnet material may be reduced and also costs may be reduced. Further, iron losses may be reduced.

In particular, several or all magnet inactive regions of several or in particular all magnet module rows may be axially aligned with a respective stator cooling duct, in order to even more improve the efficiency, require lower magnet volume and/or magnet weight.

According to an embodiment of the present invention, A: is a sum of axial extents of all magnet inactive regions of all magnet modules rows which are axially aligned with stator cooling ducts, B: is a sum of axial extents of all magnet inactive regions of all magnet modules rows which are axially aligned or axially not aligned with stator cooling ducts, wherein A/B is between 20% (or e.g. 50%) and 100%.

Thereby, a large fraction of all the magnet inactive regions may be aligned with respective stator cooling ducts, thereby reducing required magnet volume/weight and reducing costs.

According to an embodiment of the present invention, C: is a sum of axial extents of all magnet active regions of all magnet modules rows which are axially aligned with tooth segments, D: is a sum of axial extents of all magnet active regions of all magnet modules rows which are axially aligned or axially not aligned with tooth segments, wherein C/D is between 20% (or e.g. 50%) and 100%.

Thereby, magnetic interaction and thereby induction in the windings may be improved while, in connection to the previously described embodiment, the required magnet material or volume is reduced or limited.

According to an embodiment of the present invention, the magnet active regions comprise axial regions where a magnet module is arranged and/or where at least one permanent magnet is arranged, and/or wherein the magnet inactive regions comprise axial regions where no magnet module is arranged and/or where a magnet module is arranged but no permanent magnet and/or where no permanent magnet is arranged and/or where no magnetized material is arranged and/or where air and/or a gap and/or a (non-magnetic) spacer and/or a magnet cooling duct is present.

The magnet active regions may be regions where a magnetic field generated by a permanent magnet has a strength above a threshold which may be selected so that this field contributes significantly or at least above a threshold to the generated power/torque. The magnet inactive regions or in a magnet inactive region, any magnetic field present may be below a threshold strength or intensity. Thereby, for example, the magnet active regions may substantially contribute to the generation of torque/power while the magnet inactive regions may not significantly contribute to the generated torque/power.

According to an embodiment of the present invention, magnet inactive region being axially aligned with a cooling duct comprises: an axial centre of the magnet inactive region is axially at substantially the same position as an axial centre of the stator cooling duct; and/or an axial extent of the magnet inactive region is substantially equal to or between 50% and 100% of an axial extent of the stator cooling duct.

The axial alignment may be defined in different manners. For example, when the magnet inactive region starts at a first axial position and extends up to a second axial position, the alignment may be such that also the cooling duct substantially starts at the first axial position and extends up to the second axial position such that the axial overlap is substantially 100%. In other embodiments, the start axial positions may be slightly off, for example by less than 10% of the axial extent of the for example magnet inactive region or also the axial end position may be off by less than 10% of the axial extent of the for example magnet inactive region under consideration such that the axial overlap is substantially e.g. between 100% and 70%. Thereby, an efficient alignment may be provided, providing the advantages as described above.

According to an embodiment of the present invention, at least one of the following holds: each magnet inactive region is axially arranged between two magnet active regions; an axial span of all magnet active regions of at least one magnet module row axially spans/covers/overlaps all tooth segments of at least one tooth segment row; all magnet inactive regions of all magnet module rows are axially aligned with stator cooling ducts.

The rotor may be characterized by an effective length of the permanent magnet active region. Axially outside the effective permanent magnet active region, the rotor may not comprise any permanent magnets any more. The stator may similarly have an effective stator axial length comprising those regions having laminations with magnetic permeable material around which a winding is wound. The region outside this effective length may not be considered for definition of any alignments, since these outside regions do not contribute to power/torque generation. When substantially all magnet active regions (substantially, e.g. 20% to 100% or even 80% to 100%) overlap tooth segments, the efficiency of the torque/power generation may be improved while magnet material may be saved.

According to an embodiment of the present invention, each magnet module comprising: a base plate, one or more permanent magnets arranged side by side in the axial direction on the base plate and a cover.

A magnet module may thereby constitute a physical entity or piece which can be handled separately during manufacturing. In contrast, the magnet active regions and/or magnet inactive regions not necessarily are each formed by a single piece or physical unit but may be formed by for example only a portion of a physical unit or portions of at least two physical units such as magnet modules. The base plate and the cover may protect the permanent magnets and the base plate may further be utilized for appropriately conveniently mounting the magnet module at a rotor house, for example using tracks having a T-shape and running in the axial direction.

According to an embodiment of the present invention, at least two magnet modules are characterized by at least one of: the two magnet modules comprise different numbers of permanent magnets; one or more permanent magnets are axially differently positioned within the two magnet modules; the magnet active regions and/or magnet inactive regions of the two magnet modules are arranged axially at different positions and/or have different axial extent.

Conventionally, a magnet module may comprise only one permanent magnet or a fixed number of permanent magnets. When the permanent magnets are axially differently positioned within the two magnet modules, an improved alignment of the magnetic inactive regions with the stator cooling ducts may be achieved. Also, the other listed alternatives provide flexibility and provide or enable a more complete alignment with the magnet inactive regions with respective cooling ducts of the stator.

According to an embodiment of the present invention, at least one magnet active region comprises or is formed by: exactly one permanent magnet of one magnet module; plural permanent magnets belonging to one or more magnet modules, the plural magnets being arranged side by side in the axial direction; at least a portion of one magnet module; at least portions of two magnet modules arranged adjacent to each other.

Thereby, flexibility is provided to form the magnet active region. A generator according to an embodiment of the present invention may for example be constructed by using one type of magnet modules or two different types or three different types of magnet modules for example.

According to an embodiment of the present invention, at least one of the following holds: another tooth segment row circumferentially adjacent and spaced apart from the tooth segment row has stator cooling ducts at substantially same axial regions as the tooth segment row; at least one magnet active region axially spans at least one cooling duct; the plural tooth segment rows are spaced apart in a circumferential direction; the stator cooling ducts are arranged axially between tooth segments of one tooth segment row.

In particular, all tooth segment rows may be aligned in a sense that the respective stator cooling ducts are arranged at substantially same axial regions. Thereby, if a magnet inactive region of a (one) magnet module row is axially aligned with a cooling duct of one tooth segment row it will also be aligned with the cooling ducts of all other tooth segment rows.

According to an embodiment of the present invention, at least one of the following holds: the rotor is an inner or an outer rotor rotatably supported relative to the stator; the plural magnet module rows are spaced apart in a circumferential direction.

Thereby, great flexibility may be provided. The number of tooth segment rows may for example be between 100 and 1000 and/or the number of magnet module rows may be between 100 and 1000 for example.

According to an embodiment of the present invention it is provided a wind turbine, comprising: a wind turbine tower; a nacelle mounted rotatably on top of the tower; a generator according to one of the preceding embodiments arranged inside the nacelle.

The generator may further be equipped with (stator and/or rotor) cooling system equipment, for example comprising a compressor for generating compressed cooling fluid, for example compressed air, and comprising piping and/or valves for guiding the cooling fluid to the stator cooling ducts.

Also, the cooling equipment may be configured to guide cooling fluid through one or more magnet cooling ducts which may be present or arranged in the magnet inactive regions. Also, the magnet cooling ducts may run substantially in the axial direction axially between magnet active regions of the rotor.

It should be understood, that features, individually or in any combination, disclosed, described, applied or employed for a permanent magnet synchronous generator may also, in any combination or individually be applied or employed for a method of manufacturing a permanent magnet synchronous generator according to embodiments of the present invention and vice versa.

According to an embodiment of the present invention it is provided a method of manufacturing a permanent magnet synchronous generator, in particular according to any one of the claims 1 to 11, in particular for a wind turbine, the method comprising: providing a stator with plural tooth segment rows such that each tooth segment rows extends in an axial direction and comprises plural tooth segments alternating with stator cooling ducts; providing a rotor with plural magnet module rows such that each magnet module row extends in the axial direction and comprises plural magnet modules providing magnet active regions alternating with magnet inactive regions in the axial direction; axially aligning at least one magnet inactive region of at least one magnet module row with a stator cooling duct.

Furthermore, a method of manufacturing a wind turbine may be provided which includes the method of manufacturing a permanent magnet synchronous generator, manufacturing a wind turbine tower and/or manufacturing a nacelle and installing the generator within the nacelle.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Embodiments of the present invention are now described with reference to the accompanying drawings. The invention is not restricted to the illustrated or described embodiments.
Fig. 1 schematically illustrates a portion of a permanent magnet synchronous generator in a cross-sectional (or plan) view in a schematic manner according to an embodiment of the present invention;
Fig. 2 schematically illustrates a portion of a permanent magnet synchronous generator in a cross-sectional (or plan) view in a schematic manner according to another embodiment of the present invention;
Fig. 3 schematically illustrates a portion of a permanent magnet synchronous generator in a cross-sectional (or plan) view in a schematic manner according to a further embodiment of the present invention;
Fig. 4 schematically illustrates a portion of a permanent magnet synchronous generator in a cross-sectional (or plan) view in a schematic manner according to a still further embodiment of the present invention;
Fig. 5 schematically illustrates a conventional generator;
Fig. 6 schematically illustrates a stator of a permanent magnet generator according to an embodiment of the present invention in a cross-sectional view along a radial direction; and
Fig. 7 schematically illustrates a wind turbine according to an embodiment of the present invention.

### Detailed Description

The illustration in the drawings is in schematic form. It is noted that in different figures, elements similar or identical in structure and/or function are provided with the same reference signs or with reference signs, which differ only within the first digit. A description of an element not described in one embodiment may be taken from a description of this element with respect to another embodiment.

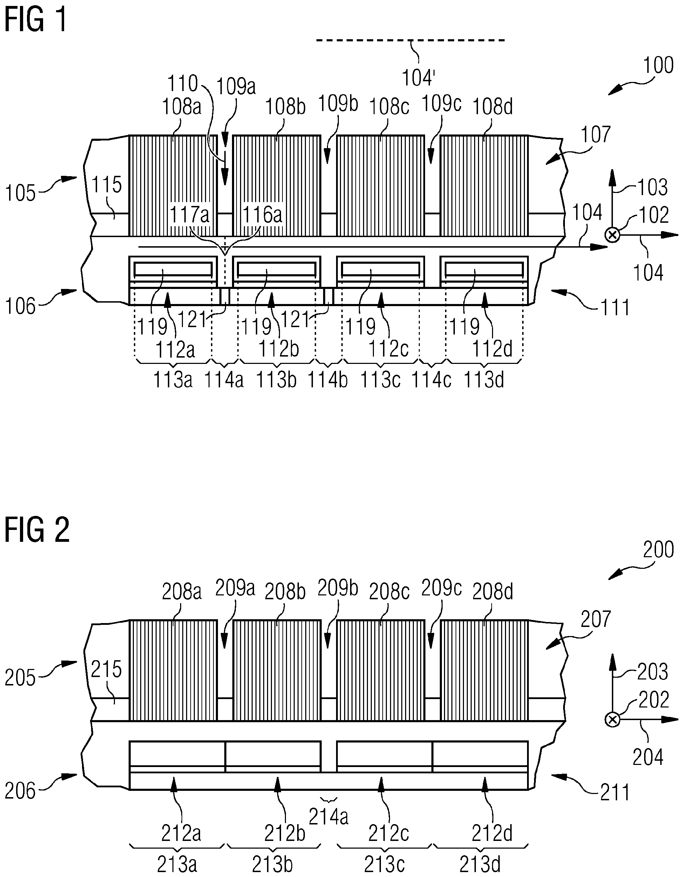

The portion of a generator 100 illustrated schematically in **Fig. 1** in a cross-sectional (or plan) view along the circumferential direction 102 being perpendicular to a radial direction 103 and also being perpendicular to an axial direction 104 comprises a stator 105 and a rotor 106. In operation, the rotor 106 rotates about the rotation axis 104' which is parallel to the axial direction 104. Fig. 1 merely illustrates a portion of the generator which may in reality have a larger extent in the axial direction 104. Further, it is noted that in Fig. 1 as well as in the next Figs. 2, 3, 4, 5, only a half of the respective generator is illustrated. Another half (for example obtainable by forming a mirror image with respect to the rotation axis 104') is omitted.

The stator 105 has plural tooth segment rows, from which in Fig. 1, only the tooth segment row 107 is illustrated. Other not illustrated tooth segment rows are circumferentially spaced apart from the illustrated tooth segment row 107 and are arranged around the entire circumference of the generator 100.

The generator 100 in the illustrated embodiment is a generator having an outer rotor 106. In other embodiments, the generator may comprise an inner rotor.

As can be appreciated from Fig. 1, the tooth segment row 107 extends in the axial direction 104 and comprises plural tooth segments 108a, 108b, 108c, 108d, ... (potentially more than illustrated in Fig. 1). The tooth segments 108a,...,d alternate with stator cooling ducts 109a, 109b, 109c (potentially less or more cooling ducts according to other embodiments). During operation, cooling fluid 110 may be guided within the cooling ducts 109a,...,c for cooling the stator 105.

The rotor 106 has plural magnet module rows from which only one magnet row 111 is illustrated in Fig. 1. The other magnet module rows are spaced apart in the circumferential direction 102 and each extends in the axial direction 104.

Each magnet module row 111 extends in the axial direction 104 and comprises plural magnet modules 112a, 112b, 112c, 112d (or more or less modules) which provide magnet active regions 113a, 113b, 113c, 113d. The magnet active regions 113a,...d alternate with magnet inactive regions 114a,b,c (or more or less magnet inactive regions).

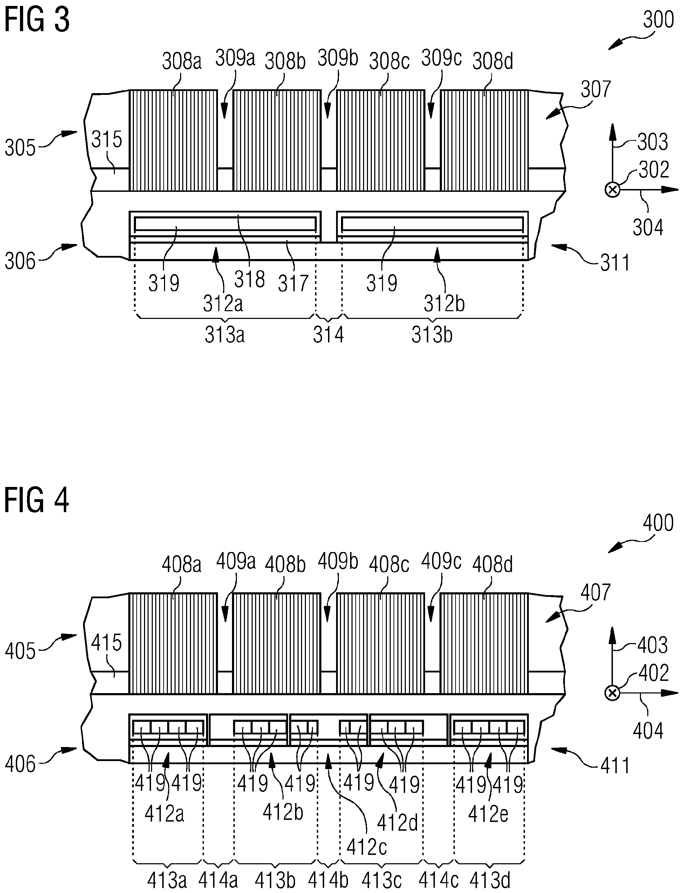

The generator 100 is further configured such that at least one magnet inactive region 114a for example of at least one magnet module row 111 is axially aligned with the stator cooling duct, for example cooling duct 109a. In the embodiment illustrated in Fig. 1, all magnet inactive regions 114a,b,c are aligned with stator cooling ducts 109a,b,c, respectively. Each of the magnet inactive regions 114a,b,c has an axial extent. The sum of those axial extents which are aligned with a stator cooling duct divided by the sum of axial extents of all magnet inactive regions (whether aligned or not aligned with a cooling duct) is a fraction A/B which is for example between 50% and 100%, representing an axial overlap fraction. In Fig. 1, this fraction A/B is equal to 100% which holds also for the embodiments Figs. 2 and 3, since each magnet inactive region is aligned (or overlaps) with a stator cooling duct In other embodiments, the fraction may have a lower value.

Furthermore, each magnet active region 113a,b,c,d has an axial extent. If the sum of all those axial extents which are axially aligned with a tooth segment 108a,b,c,d is considered and the ratio C/D with the sum of the axial extents of all the magnet active regions 113a,b,c,d is formed (whether aligned or not aligned with tooth segments), the ratio C/D has a value which lies between 50% and 100%. In Fig. 1, this ratio is also 100%.

The magnet modules in the rotor could be accommodated so that each one faces each core packet. This can for example be achieved by inserting a rotor cooling duct 121 between magnet modules as illustrated in Fig. 1. A rotor cooling duct between magnet modules aligned with a stator cooling duct may also be provided in embodiments illustrated in Fig. 2,3,4.

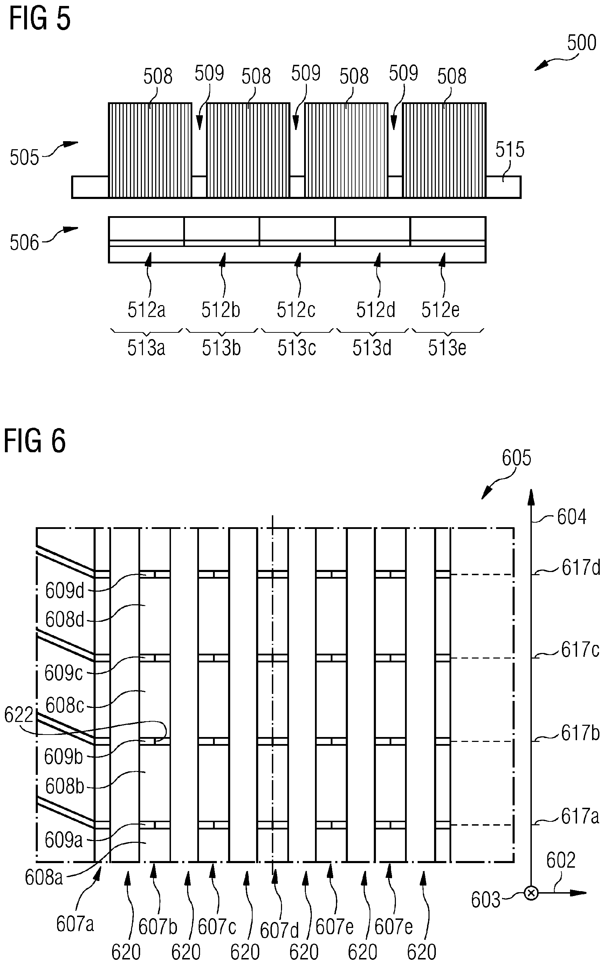

The stator further comprises plural windings of which one winding 115 which is wound around the tooth segments 108a,b,c,d, thus is wound around each of the tooth segment rows 107. In order to illustrate the winding which is actually in front of and behind (in the circumferential direction 102) the respective tooth segment row 107 it would in principle in a most accurate illustration not be visible in a cross-sectional view. In this sense, the detail of the winding 115 may be considered as not a cross-sectional view but a frontal view. The respective stator cooling ducts 109a,b,c thus run in between winding portions arranged in front of and behind the tooth segment row 107. The cooling ducts 109a,b,c may further include spacer elements or stabilizing elements as will be described in more detail with reference to Fig. 6.

In the embodiment illustrated in **Fig. 2****,** the ratio C/D is less than 100% since not the entire span of the magnet active regions 213a,b,c,d is aligned the tooth segments 208a,b,c,d.

Further, in the embodiment illustrated in Fig. 2, the magnet inactive region 214 is aligned with the stator cooling duct 209b. Thus, also in this embodiment, the ratio A/B is 100% disregarding any additional axial regions.

**Fig. 3** illustrates a further embodiment of a generator 300 according to an embodiment of the present invention having larger magnet modules 312a, 312b spanning two tooth segments 308a, 308b and 308c, 308d, respectively. Also, in the embodiment illustrated in Fig. 3, the magnet inactive region 314 between the magnet modules 312a, 312b is aligned with the stator cooling duct 309b and the ratio A/B is also 100%. However, the ratio C/D in the embodiments illustrated in Figs. 2 and 3 is less than 100%.

As can be seen in Figs. 1, 2, 3, the magnet inactive region 114a has an axial center 116a and the other magnet inactive regions 114b,c have respective centers 116b, 116c. Similarly, the stator cooling ducts 109a,b,c have axial centers 117a,b,c.

As is visible in Fig. 1, the axial centers 116a,b,c of the magnet inactive regions 114a,b,c are substantially at the same position as the axial centers 117a,b,c, respectively, of the stator cooling ducts 109a,b,c, respectively. Furthermore, the axial extents of the magnet inactive regions 114a,b,c is substantially equal to an axial extent of the stator cooling ducts 109a,b,c. These properties are also present in the embodiments illustrated in Fig. 2 or 3.

As can be seen in Figs. 1, 2, 3, the magnet inactive regions 114a,b,c, 214 or 314 are arranged axially between two magnet active regions (in Fig. 1, 113a, 113b, 113c, 113d or in Fig. 2, 213b and 213c and in Fig. 3, 313a, 313b).

Each magnet module, for example 312a illustrated in Fig. 3, comprises a base plate 317, one or more permanent magnets 319 and a cover 318. In the embodiments illustrated in Fig. 1, 2, 3, the respective magnet active regions 113, 213, 313 are respectively formed by a single magnet module (having one magnet 119 or 219) for example 112a,b,c,d in Fig. 1. In the Fig. 2, the magnet active region 213a is formed by two magnet modules 212a, 212b.

In Fig. 3 again, the magnet active region 312a is formed by a single magnet module 313a. All the magnet modules illustrated in Figs. 1, 2, 3 comprise one or more permanent magnets (e.g. 119, 319, not illustrated in Fig. 2), the one or more permanent magnets substantially cover or span the entire axial extent of the respective magnet module.

**Fig. 4** illustrates in a schematic manner in a substantially cross-sectional view along the circumferential direction 402 a generator 400 according to an embodiment of the present invention. Differently from the embodiments illustrated in Figs. 1, 2, 3, the respective magnet modules 412a, 412b, 412c, 412d have each three or four permanent magnets 419 but the permanent magnets 419 are distributed axially differently in the different magnet modules 412a,b,c,d. The magnet active regions 413a, 413b, 413c, 413d are substantially formed at the axial regions where the permanent magnets 419 are arranged in one or two magnet modules.

In particular, a portion of the entire axial extent of the magnet module 412a forms or represents the magnet active region 413a. The magnet active region 413b is, however, formed by portions of the magnet modules 412b, 412c, namely those portions which comprise the permanent magnets 419. Also, the magnet active region 413c is represented by a portion of the magnet module 412c and a portion of the magnet module 412d, namely those regions where the permanent magnets 419 are arranged. It is also noted that the magnet module 412d comprises only three permanent magnets while the magnet modules 412a, 412e comprise four permanent magnets.

Thus, the magnet active region may be formed by different designs, for example one magnet of one magnet module or plural magnets belonging to one or more magnet modules or a portion of a magnet module or at least portions of two magnet modules arranged adjacent to each other.

Fig. 5 illustrates a conventional generator 500 having stator 505 and rotor 506 in which magnet modules 512a,b,c,d,e are arranged immediately adjacent to each other and in particular contacting each other, wherein weight and material utilization problems arise.

**Fig. 6** schematically illustrates a stator 605 which may be comprised in a generator according to an embodiment of the present invention, for example may be comprised in the generators illustrated in Figs. 1, 2, 3, 4. The illustration of Fig. 6 is a cross-sectional view of a rolled-up stator in order to straighten the stator for illustration. The view is substantially along the radial direction 603. The circumferential direction 602 is horizontal and the axial direction 604 is vertical in Fig. 6.

The stator 605 thereby comprises plural tooth segment rows 607a, ..., 607h which each extend in the axial direction 604 and each comprising plural tooth segments 608 alternating with stator cooling ducts 609. As can be seen in Fig. 6, the plural tooth segment rows 607a,...,h are spaced apart in the circumferential direction 602 forming in between plural slots 620 in which not illustrated windings are arranged.

The stator cooling ducts 609 may be equipped with spacers or stiffening elements 622 for example. As can be seen from Fig. 6, the axial position of cooling ducts 609a of all the tooth segment rows 607a, ..., 607h are at a same position 617a or axial range. Further cooling ducts 609b,c,d are present in all tooth rows at the positions 617b, 617c, 617d, respectively, along axial direction 604.

According to an embodiment of the present invention, for example between 20 and 40 stator cooling ducts may be distributed axially in the stator, each having for example an axial width of between 2 mm and 10 mm, in particular 4 mm.

According to an embodiment of the present invention, a non-magnetic spacer is inserted between magnet modules and magnet blocks in order to reduce the amount of magnet material in the rotor.

For example, the magnet modules in the rotor could be accommodated so that each one faces each core packet. This can for example be achieved by inserting a cooling duct 121 between magnet modules as illustrated in Fig. 1 to be aligned with a stator cooling duct. In other embodiments, a space between magnet modules is inserted without inserting a cooling duct. Several magnet modules may cover several stator iron stacks. In other embodiments, one single magnet module may cover several stator iron stacks. Thereby, savings regarding the encapsulation process by requiring less encapsulated magnet modules may be achieved. However, the maximum size may be limited by the maximum size that the magnetizing coil is in production can accommodate (see Fig. 3). Further, as is illustrated in Fig. 4, axial spacers between magnet blocks (for example magnet active regions 413a,b,c,d in Fig. 4) may be inserted inside the magnet module so they are aligned with the cooling ducts of the stator.

Embodiments of the present invention may achieve the one or more of the following advantages:
- reduction of magnet material in regions less critical up to a maximum of 8% which may be significant cost reduction without influencing the output torque/power
- allowing the insertion of ventilation ducts in the rotor, to allow better cooling of the magnets, i.e., benefitting from a rotor house slit that is already part of the design
- reducing or additional losses localized in the regions of the stator packets adjacent to the air ducts where the flux may be crossing in perpendicular direction

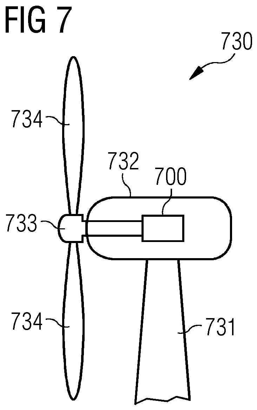

**Fig. 7** schematically illustrates a wind turbine 730 according to an embodiment of the present invention. The wind turbine comprises a wind turbine tower 731 on top of which a nacelle 732 is mounted. The nacelle comprises a generator 700 according to an embodiment of the present invention, wherein the generator is mechanically coupled to a hub 733 at which plural rotor blades 734 are coupled.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Permanent magnet synchronous generator (100), in particular for a wind turbine (730), comprising:
a stator (105) having plural tooth segment rows (107), each tooth segment rows extending in an axial direction (104) and comprising plural tooth segments (108a,b,c,d) alternating with stator cooling ducts (109a,b,c);
a rotor (106) having plural magnet module rows (111), each magnet module row extending in the axial direction (104) and comprising plural magnet modules (112a,b,c,d) providing magnet active regions (113a,b,c,d) alternating with magnet inactive regions (114a,b,c) in the axial direction;
wherein at least one magnet inactive region (114a) of at least one magnet module row (111) is axially aligned with a stator cooling duct (109a).

2. Generator according to the preceding claim, wherein
A: is a sum of axial extents of all magnet inactive regions (114a,b,c,d) of all magnet modules rows which are axially aligned with stator cooling ducts (109a,b,c),
B: is a sum of axial extents of all magnet inactive regions of all magnet modules rows which are axially aligned or axially not aligned with stator cooling ducts,
wherein A/B is between 20% and 100%.

3. Generator according to any one of the preceding claims, wherein
C: is a sum of axial extents of all magnet active regions (113a,b,c,d) of all magnet modules rows which are axially aligned with tooth segments (108a,b,c),
D: is a sum of axial extents of all magnet active regions of all magnet modules rows which are axially aligned or axially not aligned with tooth segments,
wherein C/D is between 20% and 100%.

4. Generator according to any one of the preceding claims, wherein the magnet active regions (113a,b,c) comprise axial regions where a magnet module is arranged and/or where at least one permanent magnet is arranged, and/or
wherein the magnet inactive regions (114a,b,c) comprise axial regions where no magnet module is arranged and/or where a magnet module is arranged but no permanent magnet and/or where no permanent magnet is arranged and/or where no magnetized material is arranged and/or where air and/or a gap and/or a (non-magnetic) spacer and/or a magnet cooling duct (121) is present.

5. Generator according to any one of the preceding claims, wherein magnet inactive region (114a) being axially aligned with a cooling duct (109a) comprises:
an axial center (116a) of the magnet inactive region (114a) is axially at substantially the same position as an axial center (117a) of the stator cooling duct (109a); and/or
an axial extent of the magnet inactive region is substantially equal to or between 20% and 100% of an axial extent of the stator cooling duct;

6. Generator according to any one of the preceding claims, wherein at least one of the following holds:
each magnet inactive region (114a,b,c) is axially arranged between two magnet active regions;
an axial span of all magnet active regions of at least one magnet module row axially spans/covers/overlaps all tooth segments of at least one tooth segment row;
all magnet inactive regions of all magnet module rows are axially aligned with stator cooling ducts.

7. Generator according to any one of the preceding claims, wherein each magnet module comprising:
a base plate (317),
one or more permanent magnets (419) arranged side by side in the axial direction on the base plate and
a cover (318).

8. Generator according to any one of the preceding claims, wherein at least two magnet modules are **characterized by** at least one of:
the two magnet modules (412a, 412d) comprise different numbers of permanent magnets (419);
one or more permanent magnets (419) are axially differently positioned within the two magnet modules;
one or more permanent magnets (419) have axially different length;
the magnet active regions and/or magnet inactive regions of the two magnet modules are arranged axially at different positions and/or have different axial extent.

9. Generator according to any one of the preceding claims, wherein at least one magnet active region (113a, 413a) comprises or is formed by:
exactly one permanent magnet (419) of one magnet module;
plural permanent magnets (419) belonging to one or more magnet modules, the plural magnets being arranged side by side in the axial direction;
at least a portion of one magnet module (412b);
at least portions of two magnet modules (412c,d) arranged adjacent to each other.

10. Generator according to any one of the preceding claims, wherein at least one of the following holds:
another tooth segment row (611c) circumferentially adjacent and spaced apart from the tooth segment row (611b) has stator cooling ducts (609a) at substantially same axial regions (617a) as the tooth segment row;
at least one magnet active region axially spans at least one cooling duct;
the plural tooth segment rows (611a,...,h) are spaced apart in a circumferential direction;
the stator cooling ducts (609) are arranged axially between tooth segments of one tooth segment row.

11. Generator according to any one of the preceding claims, wherein at least one of the following holds:
the rotor (106) is an inner or an outer rotor rotatably supported relative to the stator (105);
the plural magnet module rows are spaced apart in a circumferential direction.

12. Wind turbine (730), comprising:
a wind turbine tower (731);
a nacelle (732) mounted rotatably on top of the tower;
a generator (700) according to one of the preceding claims arranged inside the nacelle.

13. Method of manufacturing a permanent magnet synchronous generator, in particular according to any one of the claims 1 to 11, in particular for a wind turbine, the method comprising:
providing a stator (105) with plural tooth segment rows (611a,...,h) such that each tooth segment rows extends in an axial direction (604) and comprises plural tooth segments (608) alternating with stator cooling ducts (609);
providing a rotor (106) with plural magnet module rows (111) such that each magnet module row extends in the axial direction and comprises plural magnet modules (112a,b,c,d) providing magnet active regions (113a,b,c,d) alternating with magnet inactive regions (114a,b,c) in the axial direction;
axially aligning at least one magnet inactive region (114a) of at least one magnet module row with a stator cooling duct (109a).
